# EUROPÄISCHE PATENTSCHRIFT

(11) **EP 3 058 893 B1**
(45) Veröffentlichungstag und Bekanntmachung des Hinweises auf die Patenterteilung: **15.04.2020**
(21) Anmeldenummer: 16156097.4
(22) Anmeldetag: 17.02.2016
(51) Int. Cl.: A61C 19/00, B08B 15/00

(54) **ABSAUGVORRICHTUNG**
SUCTION DEVICE
DISPOSITIF D'ASPIRATION

(30) Priorität: 17.02.2015 DE 102015102240
(43) Veröffentlichungstag der Anmeldung: 24.08.2016
(73) Patentinhaber: Renfert GmbH, 78247 Hilzingen (DE)
(72) Erfinder: Scheid, Maximilian, 78467 Konstanz (DE)
(74) Vertreter: Daub, Thomas

(56) Entgegenhaltungen:
- EP-A2- 2 409 788
- US-A- 4 947 510

## Beschreibung

### Stand der Technik

Die Erfindung betrifft eine Absaugvorrichtung.

Es ist bereits eine Absaugvorrichtung, insbesondere eine Dentallaborabsaugvorrichtung, vorgeschlagen worden, mit zumindest einem Gehäuse und mit zumindest einer, zumindest teilweise in dem Gehäuse angeordneten Filtereinheit, die zumindest einen Filter aufweist, welcher in einem Betrieb zu einer Filterung abgesaugter Luft vorgesehen ist. Eine Absaugeinrichtung mit einem Staubauffangbehälter, welcher als Staubschublade ausgebildet ist, ist aus US 4 947 510 bekannt.

Die Aufgabe der Erfindung besteht insbesondere darin, eine gattungsgemäße Vorrichtung mit verbesserten Eigenschaften hinsichtlich eines Komforts, sowie hinsichtlich einer Bediensicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Absaugvorrichtung, insbesondere von einer Dentallaborabsaugvorrichtung, mit zumindest einem Gehäuse, mit zumindest einer, zumindest teilweise in dem Gehäuse angeordneten Filtereinheit, die zumindest einen Filter aufweist, welcher in einem Betrieb zu einer Filterung abgesaugter Luft vorgesehen ist, und mit zumindest einem entnehmbaren, in das Gehäuse integrierten Staubauffangbehälter, welcher als Staubschublade ausgebildet ist und zu einer Aufnahme eines ausgefilterten Staubs vorgesehen ist. Vorzugsweise ist der zumindest eine Staubauffangbehälter zumindest teilweise räumlich unterhalb der Filtereinheit angeordnet. Bevorzugt ist der Staubauffangbehälter einteilig ausgebildet. Der Staubauffangbehälter ist insbesondere frei von zusätzlichen Bauteilen, wie beispielsweise Deckeln. Insbesondere ist der Staubauffangbehälter in einem Schritt, also insbesondere ohne das Entfernen eines Deckels oder anderer Bauteile entleerbar.

Unter einer "Absaugvorrichtung" soll in diesem Zusammenhang insbesondere eine Vorrichtung verstanden werden, mittels der ein Luft-Staub-Gemisch abgesaugt wird, wobei der Staub über die Filtereinheit ausgefiltert wird. Vorzugsweise wird über die Vorrichtung verschmutzte Luft angesaugt, gefiltert und wieder ausgeblasen. Ferner soll in diesem Zusammenhang unter einer "Filtereinheit" insbesondere eine Einheit verstanden werden, welche in einem Betrieb zu einer Filterung abgesaugter Luft vorgesehen ist. Hierzu weist die Filtereinheit vorzugsweise einen Filter auf, durch welchen die abgesaugte Luft hindurch gesaugt wird. Dabei sind verschiedene, einem Fachmann als sinnvoll erscheinende Filter denkbar. Vorzugsweise ist der Filter als Lamellenfilter, insbesondere als runder Lamellenfilter, ausgebildet. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "Staub" können in diesem Zusammenhang verschiedene, einem Fachmann als sinnvoll erscheinende Materialien bzw. Partikel verstanden werden. Vorzugsweise kann darunter beispielsweise ein Strahlsand und/oder Partikel, welche bei einem Trennverfahren, insbesondere gemäß dem Fertigungsverfahren nach DIN 8580, anfallen, verstanden werden.

Des Weiteren soll unter einem "Staubauffangbehälter" in diesem Zusammenhang insbesondere ein Behälter verstanden werden, der zu einer Aufnahme eines durch den Filter der Filtereinheit aus einer abgesaugten Luft ausgefilterten Staubs vorgesehen ist. Vorzugsweise soll darunter ein Behälter verstanden werden, der in einem Betrieb dazu vorgesehen ist, Staub zu einer anschließenden Entnahme aus der Absaugvorrichtung und bevorzugt einer anschließenden Entsorgung aufzunehmen. Eine Aufnahme kann dabei sowohl direkt, als auch indirekt, wie beispielsweise über einen in den Staubauffangbehälter eingelegten Beutel, erfolgen. Vorzugsweise erfolgt eine Aufnahme jedoch direkt, insbesondere beutellos. Bevorzugt ist der Staubauffangbehälter vollständig aus dem Gehäuse der Absaugvorrichtung entnehmbar. Dadurch kann vorzugsweise ein leichtes Entleeren ermöglicht werden. Darunter, dass der Staubauffangbehälter "in das Gehäuse integriert ist" soll in diesem Zusammenhang insbesondere verstanden werden, dass der Staubauffangbehälter in zumindest einem Zustand zumindest teilweise durch das Gehäuse eingefasst ist. Vorzugsweise bildet der Staubauffangbehälter zumindest einen Teil einer Außenhaut der Absaugvorrichtung. Der Staubauffangbehälter schließt bevorzugt in einem, in dem Gehäuse aufgenommenen Zustand, zumindest annähernd bündig mit einem Teilbereich des Gehäuses ab. Unter einer "Staubschublade" soll in diesem Zusammenhang insbesondere ein schubladenartiger Staubauffangbehälter verstanden werden, der bevorzugt an einer Oberseite insbesondere zumindest zu einem Großteil geöffnet ist. Vorzugsweise soll darunter insbesondere ein Staubauffangbehälter verstanden werden der zumindest teilweise über eine Schiene und/oder ein anderes, einem Fachmann als sinnvoll erscheinendes Führungselement relativ zu einer anderen Einheit, wie insbesondere dem Gehäuse der Absaugvorrichtung, zumindest teilweise gelagert ist. Bevorzugt soll darunter insbesondere ein Staubauffangbehälter verstanden werden, der zumindest in einem begrenzten Bereich auf einer zumindest annähernd tangentialen Bewegungsbahn geführt ist. Besonders bevorzugt soll darunter ein Staubauffangbehälter verstanden werden, der mit zumindest einer Seite, insbesondere einer Front und/oder einer zumindest annähernd senkrecht zu einer Bewegungsrichtung verlaufenden Seite, eine Außenseite des Gehäuses der Absaugvorrichtung bildet.

Durch die erfindungsgemäße Absaugvorrichtung kann vorteilhaft ein hoher Bedienkomfort erreicht werden. Ferner kann durch die erfindungsgemäße Absaugvorrichtung ein schnelles und einfaches Entsorgen eines ausgefilterten Staubs erreicht werden. Es kann ferner eine vorteilhafte Zugänglichkeit des Staubauffangbehälters erreicht werden. Zudem kann auch ein einfaches Entnehmen ermöglicht werden. Des Weiteren kann dadurch eine vorteilhaft kompakte Bauweise erreicht werden. Hierdurch kann ein Platzbedarf vorteilhaft gering gehalten werden.

Erfindungsgemäß wird vorgeschlagen, dass der zumindest eine Staubauffangbehälter in einem Betrieb in einem in das Gehäuse eingeschobenen Zustand geerdet ist. Vorzugsweise ist zumindest ein Großteil der Bauteile, an welchen ungefilterte Luft direkt vorbeiströmt, geerdet. Unter "geerdet" soll in diesem Zusammenhang insbesondere verstanden werden, dass das Bauteil, insbesondere der zumindest eine Staubauffangbehälter, zumindest in einem eingesteckten, mit einem Stromnetz verbundenen Zustand der Absaugvorrichtung elektrisch mit einem Erdpotential, insbesondere einer Schutzerdung, verbunden ist. Unter "zumindest einem Großteil" soll in diesem Zusammenhang zumindest 50%, vorzugsweise zumindest 70% und besonders bevorzugt zumindest 90% eines Gesamten, insbesondere aller Bauteile, an welchen ungefilterte Luft direkt vorbeiströmt, verstanden werden. Dadurch können vorteilhaft statische Aufladungen durch in dem Staubauffangbehälter umherfliegende Partikel vermieden werden. Es kann das Risiko eines elektrischen Schlags bei der Berührung des Staubauffangbehälters zumindest verringert werden. Ferner kann das Risiko einer Beschädigung einer innenliegenden Elektronik zumindest verringert werden.

In einer alternativen Ausgestaltung sind die Merkmale des Oberbegriffs der Erfindung, wonach die Absaugvorrichtung, insbesondere Dentallaborabsaugvorrichtung, zumindest ein Gehäuse aufweist, zumindest eine, zumindest teilweise in dem Gehäuse angeordnete Filtereinheit aufweist, mit zumindest einem Filter, welcher in einem Betrieb zu einer Filterung abgesaugter Luft vorgesehen ist, und zumindest einen entnehmbaren, in das Gehäuse integrierten Staubauffangbehälter aufweist, welcher als Staubschublade ausgebildet ist und zu einer Aufnahme eines ausgefilterten Staubs vorgesehen ist, auch unabhängig von einem kennzeichnenden Teil der Erfindung denkbar, sodass die Merkmale insbesondere auch unabhängig betrachtet zu einer Erfüllung der ausgeführten Vorteile verwendet werden können.

Ferner wird vorgeschlagen, dass der zumindest eine, als Staubschublade ausgebildete Staubauffangbehälter zumindest einen Teil einer Vorderfont des Gehäuses bildet. Vorzugsweise bildet der Staubauffangbehälter zumindest 10%, vorzugsweise zumindest 20% und besonders bevorzugt zumindest 30% einer Vorderfront des Gehäuses. Unter einer "Vorderfront" soll in diesem Zusammenhang insbesondere eine Frontseite des Gehäuses verstanden werden. Vorzugsweise soll darunter insbesondere eine, in einem vorgesehenen Zustand einem Benutzer zugewandte Seite des Gehäuses verstanden werden. Dadurch kann eine vorteilhafte Zugänglichkeit des Staubauffangbehälters erreicht werden. Zudem kann auch ein einfaches Entnehmen des Staubauffangbehälters ermöglicht werden. Insbesondere kann ein Teil der Vorderfront für den Staubauffangbehälter genutzt werden.

Des Weiteren wird vorgeschlagen, dass der zumindest eine, als Staubschublade ausgebildete Staubauffangbehälter zu einer beutellosen Verwendung vorgesehen ist. Vorzugsweise ist der Staubauffangbehälter dazu vorgesehen, Staub direkt, daher beutellos, in einem dafür vorgesehenen Aufnahmebereich aufzunehmen. Dadurch kann vorteilhaft ein hoher Bedienkomfort erreicht werden. Ferner kann dadurch ein schnelles und einfaches Entsorgen eines ausgefilterten Staubs erreicht werden. Es kann auf Beutel und die damit verbundenen Kosten verzichtet werden.

Grundsätzlich kann der Staubauffangbehälter auch mit einem, insbesondere optionalen, Entsorgungsbeutel versehen werden. Der Entsorgungsbeutel ist dabei insbesondere von einem zumindest im Wesentlichen luftundurchlässigen Beutel gebildet. Der Entsorgungsbeutel ist dabei insbesondere different von einem Filtersack, durch welchen eine Luft bei einer Filterung gesaugt wird. Dadurch kann eine komfortable Entsorgung erreicht werden. Es kann ein Kontakt mit einem Staub vermieden werden.

Es wird ferner vorgeschlagen, dass die Absaugvorrichtung zumindest ein Sperrringelement aufweist, welches an einer Innenseite des Staubauffangbehälters angeordnet ist. Vorzugsweise ist das Sperrringelement zu einer Vermeidung eines Hochwirbelns eines sich in dem Staubauffangbehälter befindlichen Staubs vorgesehen. Vorzugsweise ist das zumindest eine Sperrringelement an einer einem Aufnahmebereich des Staubauffangbehälters zugewandten Innenwand des Staubauffangbehälters angeordnet. Bevorzugt liegt das Sperrringelement in Umfangsrichtung vollständig an einer Innenseite des Staubauffangbehälters an. Besonders bevorzugt liegt das Sperrringelement auf Rippen des Staubauffangbehälters auf. Die Rippen dienen insbesondere der lagerichtigen Positionierung des Sperrringelements. Vorzugsweise ist das zumindest eine Sperrringelement an einer Innenseite des Staubauffangbehälters fixiert, besonders bevorzugt angeklebt. Es wäre jedoch auch denkbar, dass das Sperrringelement einstückig mit dem Staubauffangbehälter ausgebildet ist. Dabei soll unter "einstückig" insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es wäre jedoch auch denkbar, dass das Sperrringelement lediglich lösbar mit dem Staubauffangbehälter verbunden ist. Dabei wäre insbesondere denkbar, dass das Sperrringelement zu einer Fixierung eines Entsorgungsbeutels genutzt werden könnte. Der Entsorgungsbeutel könnte beispielsweise zwischen dem Sperrringelement und einer Innenseite des Staubauffangbehälters verklemmt werden. Grundsätzlich wäre jedoch auch eine andere, einem Fachmann als sinnvoll erscheinende Positionierung des Sperrringelements denkbar. Beispielsweise kann das Sperrringelement an der Filtereinheit angeordnet sein. Unter einem "Sperrringelement" soll in diesem Zusammenhang insbesondere ein Element verstanden werden, welches dazu vorgesehen ist Verwirbelungen in einem Bereich des Staubauffangbehälters, insbesondere in einem Aufnahmebereich des Staubauffangbehälters, nach oben hin zu begrenzen. Vorzugsweise soll darunter insbesondere ein Element verstanden werden, welches eine Barriere bildet, die eine Ausbreitung von Verwirbelungen, insbesondere in einem Randbereich des Aufnahmebereichs, nach oben stoppt. Das Element bildet dazu vorzugsweise eine in einen Zwischenbereich zwischen dem Staubauffangbehälter und dem Filter ragende Wandung. Das Sperrringelement kann sowohl als ein Ringsegment, als auch als ein gesamter Ring ausgebildet sein. Vorzugsweise ist das Sperrringelement als ein vollständiger Ring ausgebildet. Bevorzugt weist das Sperrringelement eine Haupterstreckungsebene auf, die sich parallel zu einem Boden des Staubauffangbehälters erstreckt. Dabei soll unter einer "Haupterstreckungsebene" einer Baueinheit insbesondere eine Ebene verstanden werden, welche parallel zu einer größten Seitenfläche eines kleinsten geometrischen Quaders ist, welcher die Baueinheit gerade noch vollständig umschließt, und insbesondere durch den Mittelpunkt des Quaders verläuft. Durch das Sperrringelement kann vorteilhaft ein Hochwirbeln eines sich in dem Staubauffangbehälter befindlichen Staubs vermieden werden. Vorzugsweise kann vermieden werden, dass Staub aus dem Staubauffangbehälter zurück zu der Filtereinheit gelangen kann. Hierdurch kann ein schnelles Zusetzten des Filters der Filtereinheit verhindert werden. Insbesondere kann verhindert werden, dass auch bei nicht stattfindender Absaugung, jedoch laufendem Antrieb, der Filter durch aufgewirbelten Staub zugesetzt werden kann. Ferner kann durch die geringen Strömungen in dem Staubauffangbehälter eine Hügelbildung vermieden werden. Es kann eine gleichmäßige Füllung erreicht werden. Hierdurch kann ein Volumen des Staubauffangbehälters optimal genutzt werden.

Ferner ist erfindungsgemäß vorgesehen, dass der zumindest eine Staubauffangbehälter zumindest teilweise aus einem elektrisch ableitfähigen Kunststoff besteht. Vorzugsweise ist zumindest ein Großteil der Bauteile, an welchen ungefilterte Luft direkt vorbeiströmt, aus einem elektrisch ableitfähigen Material. Unter einem "elektrisch ableitfähigen Kunststoff" soll in diesem Zusammenhang insbesondere ein elektrisch ableitfähiges Material oder ein elektrisch ableitfähiger Materialverbund verstanden werden, der zumindest teilweise aus einem Kunststoff besteht. Vorzugsweise soll darunter insbesondere ein Kunststoff oder ein Materialverbund mit Kunststoff verstanden werden, welchem ein elektrisch leitfähiges Material und/oder besonders bevorzugt ein Permanent-Antistatikum beigemischt ist. Dabei sind verschiedene, einem Fachmann als sinnvoll erscheinende Kunststoffe denkbar. Vorzugsweise wird jedoch ein ABS-Kunststoff, bevorzugt ein flammwidriger ABS-Kunststoff verwendet. Ferner sind verschiedene, einem Fachmann als sinnvoll erscheinende Permanent-Antistatika denkbar. Grundsätzlich kann darunter jedoch auch ein Kunststoff mit einer elektrisch leitfähigen Beschichtung verstanden werden. Dabei soll unter einem "elektrisch ableitfähigen Material oder einem elektrisch ableitfähigen Materialverbund" insbesondere ein Material oder ein Materialverbund verstanden werden, das/der einen elektrischen Widerstand von weniger als 10¹¹ Ω und besonders bevorzugt von mehr als 10 Ω aufweist. Grundsätzlich wäre jedoch auch denkbar, dass der Staubauffangbehälter lediglich mit einem elektrisch leitfähigen Material ausgekleidet ist. Dadurch kann vorteilhaft eine Erdung des Staubauffangbehälters bei einer Ausführung aus Kunststoff ermöglicht werden. Ferner können dadurch vorteilhaft statische Aufladungen, durch in dem Staubauffangbehälter umherfliegende Partikel vermieden werden. Zudem kann das Risiko eines elektrischen Schlags bei der Berührung des Staubauffangbehälters zumindest verringert werden. Ferner kann das Risiko einer Beschädigung einer innenliegenden Elektronik zumindest verringert werden.

Des Weiteren wird vorgeschlagen, dass die Absaugvorrichtung zumindest eine elektrisch ableitfähige Dichtung aufweist, an welcher der zumindest eine Staubauffangbehälter in einem in das Gehäuse eingeschobenen Zustand anliegt. Vorzugsweise ist die elektrisch ableitfähige Dichtung dazu vorgesehen, den zumindest einen Staubauffangbehälter gegen ein Filtergehäuse abzudichten. Unter einer "elektrisch ableitfähigen Dichtung" soll in diesem Zusammenhang insbesondere eine Dichtung verstanden werden, die zumindest teilweise aus einem elektrisch ableitfähigen Material oder einem elektrisch ableitfähigen Materialverbund besteht. Dadurch kann vorteilhaft eine statische Ableitfähigkeit des Staubauffangbehälters in einem in das Gehäuse eingeschobenen Zustand gewährleistet werden. Insbesondere kann erreicht werden, dass für die Ableitfähigkeit keine zusätzlichen Teile benötigt werden. Ferner können dadurch vorteilhaft statische Aufladungen, durch in dem Staubauffangbehälter umherfliegende Partikel vermieden werden. Zudem kann das Risiko eines elektrischen Schlags bei der Berührung des Staubauffangbehälters zumindest verringert werden. Ferner kann die Entstehung von Zündquellen verhindert werden. Hierdurch kann wiederum das gefahrlose Absaugen von explosiven Luft-Staub-Gemischen oder anderen Fluiden ermöglicht werden. Des Weiteren kann ein vorteilhaft großflächiger Kontakt zu einer elektrischen Ableitung bereitgestellt werden. Zudem kann der Staubauffangbehälter bei einer Entnahme direkt frei beweglich ausgeführt sein. Es kann auf eine Demontage von Kabeln, welche einer elektrischen Ableitung dienen, verzichtet werden.

Es wird ferner vorgeschlagen, dass die zumindest eine elektrisch ableitfähige Dichtung elektrisch mit einer Systemerde verbunden ist. Unter einer "Systemerde" soll in diesem Zusammenhang insbesondere die Schutzerdung der Absaugvorrichtung verstanden werden. Vorzugsweise soll darunter eine durch einen Stromanschluss bereitgestellte Erdung verstanden werden. Dadurch kann zuverlässig eine Ableitfähigkeit erreicht werden. Es kann eine zuverlässige Erdung in einem Betrieb der Absaugvorrichtung bereitgestellt werden.

Es wird weiter vorgeschlagen, dass die zumindest eine elektrisch ableitfähige Dichtung zumindest teilweise aus einem elektrisch ableitfähigen Elastomer besteht. Unter einem "elektrisch ableitfähigen Elastomer" soll in diesem Zusammenhang insbesondere ein elektrisch ableitfähiges Material oder ein elektrisch ableitfähiger Materialverbund verstanden werden, das/der zumindest teilweise aus einem Elastomer besteht. Vorzugsweise soll darunter insbesondere ein Elastomer oder ein Materialverbund mit einem Elastomer verstanden werden, welchem ein elektrisch leitfähiges Material und/oder besonders bevorzugt ein Permanent-Antistatikum beigemischt ist. Grundsätzlich kann darunter jedoch auch ein Elastomer mit einer elektrisch leitfähigen Beschichtung verstanden werden. Dabei sind verschiedene, einem Fachmann als sinnvoll erscheinende Elastomere denkbar. Dadurch kann zuverlässig eine Ableitfähigkeit erreicht werden, ohne dass eine Dichtungswirkung eingeschränkt ist. Ferner kann eine zuverlässige Erdung in einem Betrieb der Absaugvorrichtung bereitgestellt werden.

Zudem wird vorgeschlagen, dass die Absaugvorrichtung zumindest eine Rampe aufweist, auf welcher der zumindest eine Staubauffangbehälter in dem Gehäuse geführt ist. Vorzugsweise dient die zumindest eine Rampe als Führung des als Staubschublade ausgebildeten Staubauffangbehälters. Bevorzugt ist der Staubauffangbehälter über die zumindest eine Rampe in dem Gehäuse geführt. Unter einer "Rampe" soll in diesem Zusammenhang insbesondere ein Element verstanden werden, welches zumindest eine Auflagefläche aufweist, auf welcher der Staubauffangbehälter in zumindest einem Betriebszustand zu einer Führung aufliegt. Vorzugsweise weist die Auflagefläche in zumindest einem Teilbereich eine von null differierende Steigung auf, die parallel zu einer Haupterstreckungsrichtung der Auflagefläche ansteigt. Dadurch kann insbesondere eine konstruktiv einfache Führung bereitgestellt werden. Ferner kann je nach Neigung der Rampe eine vorteilhaft einfache Entnahme oder Einführung erreicht werden.

Ferner wird vorgeschlagen, dass die zumindest eine Rampe dazu vorgesehen ist, den zumindest einen Staubauffangbehälter bei einem Einschubvorgang in das Gehäuse anzuheben und gegen die Dichtung zu drücken. Vorzugsweise wird der Staubauffangbehälter, bei einem Einschubvorgang in das Gehäuse, über die Rampe nach oben geschoben und dabei angehoben. Dadurch kann eine zuverlässige Abdichtung zwischen dem Staubauffangbehälter und der Dichtung erreicht werden. Ferner kann so ein komfortables Ausziehen und Einschieben des Staubauffangbehälters erreicht werden, insbesondere da eine Störung durch die Dichtung vermieden wird.

Des Weiteren wird vorgeschlagen, dass die zumindest eine Rampe einstückig mit dem Gehäuse ausgebildet ist. Dadurch kann vorteilhaft eine Anzahl von Bauteilen gering gehalten werden. Ferner kann so zuverlässig eine genaue Ausrichtung des Staubauffangbehälters relativ zu dem Gehäuse gewährleistet werden. Es kann eine zuverlässige Passung des Staubauffangbehälters gewährleistet werden.

Es wird ferner vorgeschlagen, dass die Absaugvorrichtung zumindest eine Verschlusseinheit aufweist, über welches der zumindest eine Staubauffangbehälter in einem in das Gehäuse eingeschobenen Zustand an dem Gehäuse positionsfest fixiert werden kann. Vorzugsweise kann der zumindest eine Staubauffangbehälter über die Verschlusseinheit vertikal an einer Frontblende des Gehäuses positionsfest fixiert werden. Bevorzugt ist die Verschlusseinheit als ein Kniehebelspannverschluss ausgebildet. Hierdurch kann auch bei schwerer Füllung des Staubauffangbehälters eine zuverlässige Abdichtung eines Aufnahmebereichs, insbesondere an einer Dichtung, bereitgestellt werden.

Die erfindungsgemäße Absaugvorrichtung soll hierbei nicht auf die oben beschriebene Anwendung und Ausführungsform beschränkt sein. Insbesondere kann die erfindungsgemäße Absaugvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Absaugvorrichtung mit einem Staubauffangbehälter in einer schematischen Vorderansicht,
- Fig. 2: die erfindungsgemäße Absaugvorrichtung mit dem Staubauffangbehälter in einer schematischen Rückansicht,
- Fig. 3: die erfindungsgemäße Absaugvorrichtung mit dem Staubauffangbehälter, mit einer Antriebseinheit und mit einer Filtereinheit in einer schematischen Explosionsdarstellung,
- Fig. 4: die Filtereinheit mit einer Endscheibe und eine Zentralmutter der erfindungsgemäßen Absaugvorrichtung in einer schematischen Darstellung von unten betrachtet,
- Fig. 5: die erfindungsgemäße Absaugvorrichtung in einer schematischen Schnittdarstellung durch einen geometrischen Mittelpunkt der Filtereinheit,
- Fig. 6: einen Teilausschnitt VI der erfindungsgemäßen Absaugvorrichtung mit einer Wirbelsperreinheit, welche ein Sperrringelement aufweist, in einer schematischen Schnittdarstellung,
- Fig. 7: die erfindungsgemäße Absaugvorrichtung in einer schematischen Schnittdarstellung durch einen geometrischen Mittelpunkt eines Ansaugrohrs der Absaugvorrichtung,
- Fig. 8: eine alternative erfindungsgemäße Absaugvorrichtung mit einem Staubauffangbehälter in einer schematischen Vorderansicht,
- Fig. 9: die alternative erfindungsgemäße Absaugvorrichtung mit dem Staubauffangbehälter in einer schematischen Rückansicht,
- Fig. 10: die alternative erfindungsgemäße Absaugvorrichtung mit dem Staubauffangbehälter, mit einer Antriebseinheit und mit einer Filtereinheit in einer schematischen Explosionsdarstellung,
- Fig. 11: die Filtereinheit mit einer Endscheibe und eine Zentralmutter der alternativen erfindungsgemäßen Absaugvorrichtung in einer schematischen Darstellung von unten betrachtet,
- Fig. 12: die alternative erfindungsgemäße Absaugvorrichtung in einer schematischen Schnittdarstellung durch einen geometrischen Mittelpunkt der Filtereinheit und
- Fig. 13: die erfindungsgemäße Absaugvorrichtung in einer schematischen Schnittdarstellung durch einen geometrischen Mittelpunkt eines Ansaugrohrs der Absaugvorrichtung.

### Beschreibung der Ausführungsbeispiele

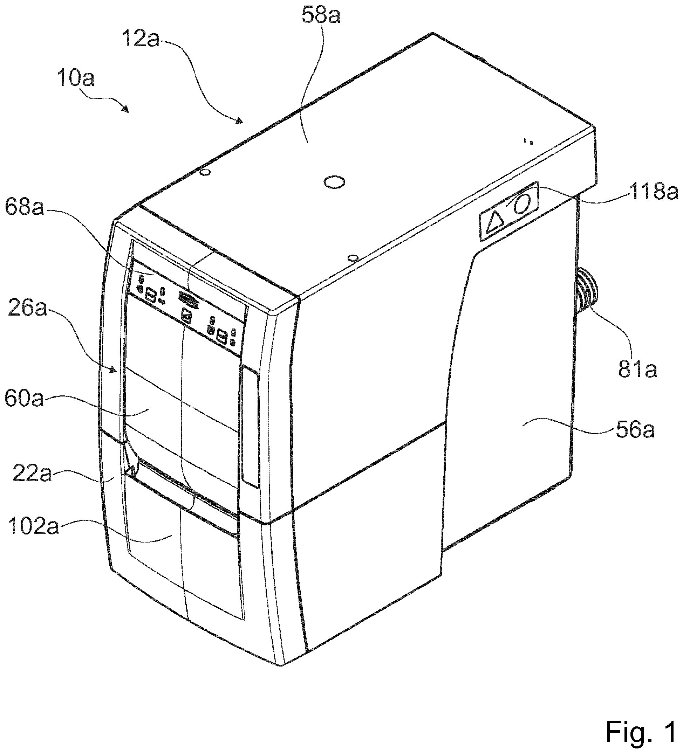

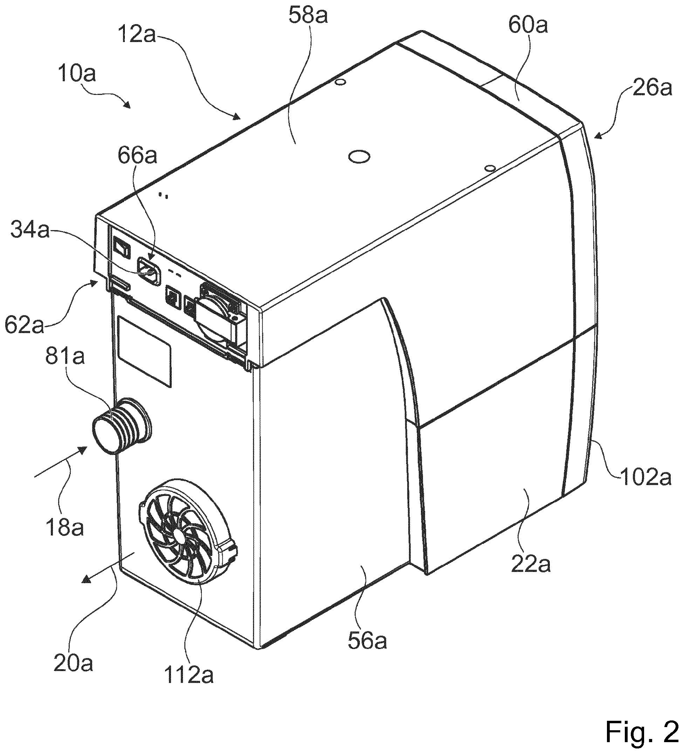

Figur 1 zeigt eine Absaugvorrichtung 10a in einer schematischen Darstellung. Die Absaugvorrichtung 10a ist als eine Dentallaborabsaugvorrichtung ausgebildet. Die Absaugvorrichtung 10a ist als ein Untertischgerät zum Einsatz in einem Zahntechniklabor ausgebildet. Grundsätzlich wäre jedoch auch eine andere, einem Fachmann als sinnvoll erscheinende Ausbildung der Absaugvorrichtung 10a denkbar. Die Absaugvorrichtung 10a weist ein Gehäuse 12a auf. Das Gehäuse 12a ist als ein Kunststoffgehäuse ausgebildet. Das Gehäuse 12a weist eine annähernd quaderförmige Grundform auf. Das Gehäuse 12a weist einen Gehäusegrundkörper 56a, einen auf dem Gehäusegrundkörper 56a angeordneten Gehäusedeckel 58a und eine Frontblende 60a auf. Die Frontblende 60a ist fest mit dem Gehäusedeckel 58a verbunden. Grundsätzlich wäre auch eine einteilige Ausbildung der Frontblende 60a mit dem Gehäusedeckel 58a denkbar. Die Frontblende 60a bildet teilweise eine Vorderfront 26a des Gehäuses 12a. Der Gehäusedeckel 58a ist über ein auf der Rückseite des Gehäuses 12a angeordnetes Scharnier 62a gegenüber dem Gehäusegrundkörper 56a verschwenkbar, wobei das Scharnier 62a derart ausgestaltet ist, dass mittels einer Verschwenkbewegung eine vollkommene Trennung des Gehäusedeckels 58a von dem Gehäusegrundkörper 56a möglich ist. Ein unbeabsichtigtes Verschwenken des Gehäusedeckels 58a ist während eines regulären Betriebs durch nicht weiter sichtbare Schrauben unterbunden. Ein Öffnen bzw. Entfernen des Gehäusedeckels 58a ist insbesondere für Servicezwecke vorgesehen (Figur 1, 2, 3).

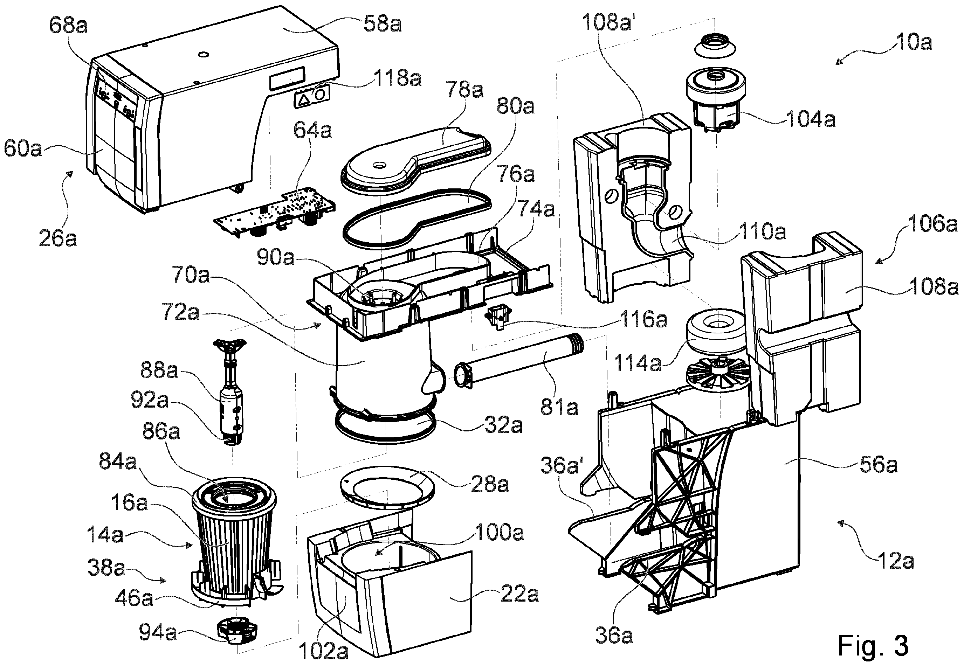

Ferner weist die Absaugvorrichtung 10a eine Elektronikeinheit 64a auf. Die Elektronikeinheit 64a ist auf einer Innenseite des Gehäusedeckels 58a angeordnet. Die Elektronikeinheit 64a ist nicht weiter sichtbar an eine Innenseite des Gehäusedeckels 58a angeklippst. Die Elektronikeinheit 64a weist einen elektrischen Steckverbinder 66a auf, an welchen ein Stromkabel angeschlossen werden kann. Der Steckverbinder 66a weist einen Kontakt für eine Schutzerdung auf. Die Schutzerdung bildet eine Systemerde 34a. Die Elektronikeinheit 64a ist nicht weiter sichtbar mit einer Ein- und Ausgabeeinheit 68a verbunden. Die Ein- und Ausgabeeinheit 68a ist in die Frontblende 60a des Gehäuses 12a integriert. Über die Ein- und Ausgabeeinheit 68a kann die Absaugvorrichtung 10a durch einen Bediener gesteuert werden (Figur 3).

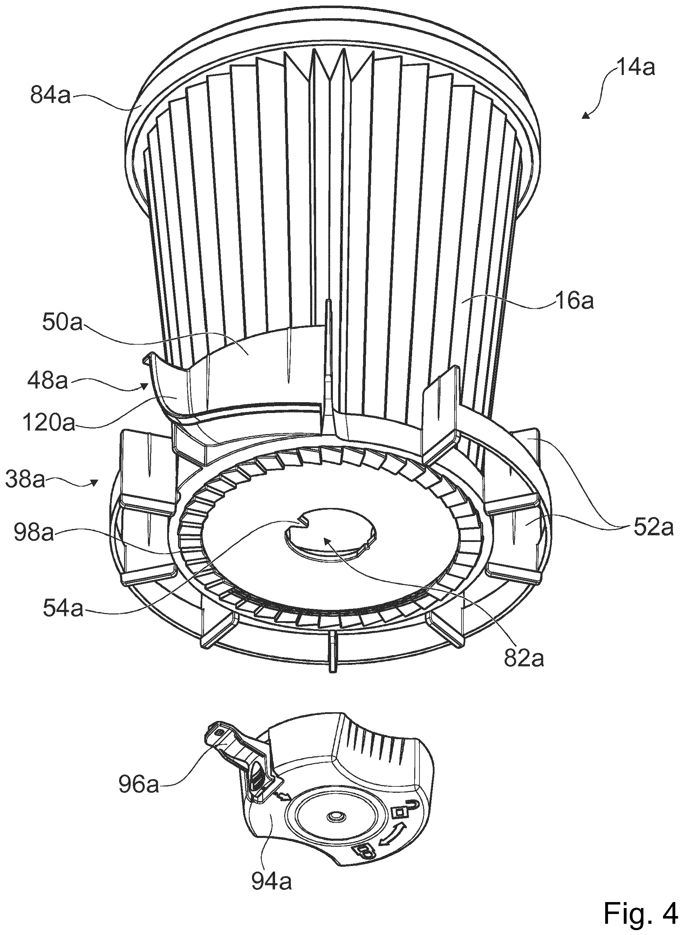

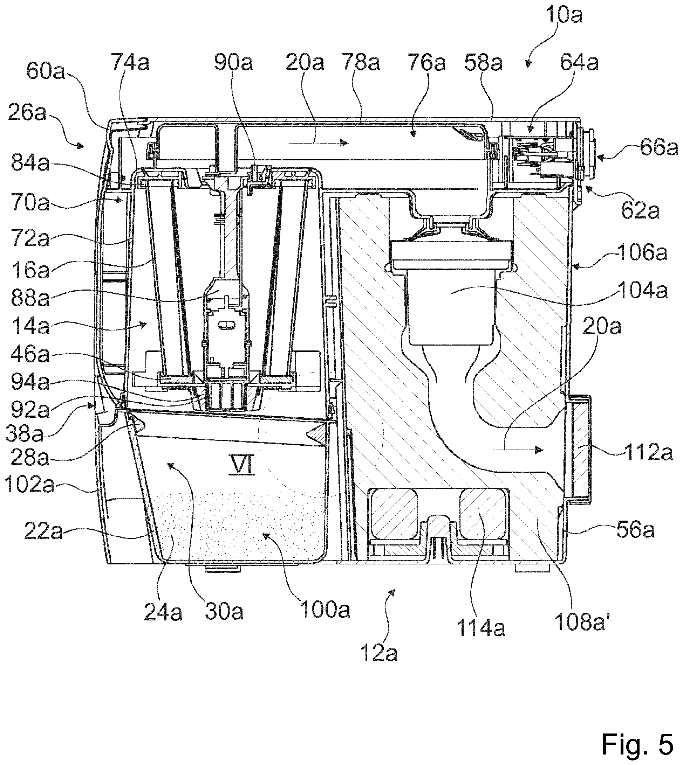

Des Weiteren weist die Absaugvorrichtung 10a eine Filtereinheit 14a auf. Die Filtereinheit 14a ist in dem Gehäuse 12a angeordnet. Die Filtereinheit 14a ist in einem Filtergehäuse 70a angeordnet. Die Filtereinheit 14a weist einen Filter 16a auf. Der Filter 16a ist in einem Betrieb zu einer Filterung abgesaugter Luft 18a, 20a vorgesehen. Der Filter 16a ist als ein Lamellenfilter ausgebildet. Grundsätzlich wäre jedoch auch eine andere, einem Fachmann als sinnvoll erscheinende Ausbildung des Filters 16a denkbar. Der Filter 16a weist eine kegelstumpfförmige Grundform auf. Ferner weist die Filtereinheit 14a eine Endscheibe 46a auf. Die Endscheibe 46a besteht aus Kunststoff. Die Endscheibe 46a ist an einem unteren Ende des Filters 16a angeordnet. Der Filter 16a ist in der Endscheibe 46a aufgenommen. Der Filter 16a ist in der Endscheibe 46a in eine Kunststoffmasse eingegossen. Die Endscheibe 46a weist eine scheibenförmige Grundform auf. Ferner weist die Endscheibe 46a eine zentrale Ausnehmung 82a auf. Des Weiteren weist die Filtereinheit 14a eine obere Abschlussscheibe 84a auf. Die Abschlussscheibe 84a ist an einem oberen Ende des Filters 16a angeordnet. Der Filter 16a ist in der Abschlussscheibe 84a aufgenommen. Der Filter 16a ist, auf einer der Endscheibe 46a gegenüberliegenden Seite, in der Abschlussscheibe 84a in eine Kunststoffmasse eingegossen. Die Abschlussscheibe 84a weist eine scheibenförmige Grundform auf. Ferner weist die Abschlussscheibe 84a eine zentrale Ausnehmung 86a auf (Figur 4, 5).

Das Filtergehäuse 70a, in welchem die Filtereinheit 14a angeordnet ist, ist in dem Gehäuse 12a angeordnet. Das Filtergehäuse 70a dient teilweise zu einer Strömungsführung. Das Filtergehäuse 70a weist einen annähernd hohlzylindrischen Grundbereich 72a auf. Die Filtereinheit 14a ist in dem Grundbereich 72a aufgenommen und wird von diesem umschlossen. Ferner weist das Filtergehäuse 70a einen zumindest teilweise plattenförmigen Funktionsbereich 74a auf. Der Funktionsbereich 74a schließt an einer oberen Stirnseite des Grundbereichs 72a an. Der Grundbereich 72a und der Funktionsbereich 74a sind einstückig ausgebildet. Über den Funktionsbereich 74a ist das Filtergehäuse 70a nicht weiter sichtbar mit dem Gehäuse 12a verschraubt. Ferner weist der Funktionsbereich 74a eine Strömungsleitkammer 76a auf. Die Strömungsleitkammer 76a ist nach oben hin, auf einer dem Grundbereich 72a abgewandten Seite, mittels einem Deckel 78a verschlossen. Zwischen dem Deckel 78a und der Strömungsleitkammer 76a ist eine Dichtung 80a angeordnet. Der Deckel 78a ist nicht weiter sichtbar auf der Strömungsleitkammer 76a fixiert. Über den Deckel 78a kann die Strömungsleitkammer 76a von oben, insbesondere für Wartungszwecke, zugänglich gemacht werden. Ferner weist die Strömungsleitkammer 76a einen Durchgang in einen Innenraum des Grundbereichs 72a auf. Der Durchgang schließt direkt an die Ausnehmung 86a in der Abschlussscheibe 84a der Filtereinheit 14a an. Über den Durchgang kann Luft 20a aus einem Innenraum des Grundbereichs 72a bzw. aus einem Innenraum der Filtereinheit 14a in die Strömungsleitkammer 76a gelangen. Der Grundbereich 72a des Filtergehäuses 70a ist zu der Strömungsleitkammer 76a hin geöffnet. Ferner ist der Grundbereich 72a zu einer der Strömungsleitkammer 76a gegenüberliegenden Stirnseite hin geöffnet. Des Weiteren weist der Grundbereich 72a eine in einer Mantelfläche angeordnete Ansaugöffnung auf. An der Ansaugöffnung des Grundbereichs 72a ist ein Ansaugrohr 81 a angeschlossen. Das Ansaugrohr 81a ragt teilweise aus dem Gehäuse 12a der Absaugvorrichtung 10a. An ein aus dem Gehäuse 12a ragendes Ende des Ansaugrohrs 81a kann ein Absaugschlauch direkt angeschlossen werden, der mit einem Gerät verbunden ist, bei dem eine Absaugung benötigt wird. Grundsätzlich wäre jedoch auch denkbar, dass anstelle des Ansaugohrs 81a direkt ein Absaugschlauch, insbesondere unter Verwendung einer Außengeometrie des Ansaugschlauchs, in das Gehäuse eingedreht und an die Ansaugöffnung des Grundbereichs 72a angeschlossen wird (Figur 3, 5).

Ferner weist die Absaugvorrichtung 10a einen Rüttelstab 88a auf. Der Rüttelstab 88a dient zu einer Abreinigung des Filters 16a der Filtereinheit 14a. Der Rüttelstab 88a weist dazu einen nicht weiter sichtbaren Rüttelmotor auf, welcher dazu vorgesehen ist, die Filtereinheit 14a in definierten Reinigungsphasen zu einem Schwingen anzuregen. Dabei fällt Staub 24b, welcher sich in dem Filter 16a festgesetzt hat, aus dem Filter 16a. Der Rüttelstab 88a ist in einem Innenraum der Filtereinheit 14a angeordnet. Der Rüttelstab 88a ist von der Filtereinheit 14a umschlossen. Der Rüttelstab 88a ist an einem oberen Ende an angespritzen Lagerstellen 90a des Filtergehäuses 70a befestigt. Die Lagerstellen 90a sind um den Durchgang zwischen der Strömungsleitkammer 76a und dem Grundbereich 72a angeordnet. Der Rüttelstab 88a ragt daher mit einem oberen Ende durch die Ausnehmung 86a in der Abschlussscheibe 84a der Filtereinheit 14a und den Durchgang in die Strömungsleitkammer 76a. Der Rüttelstab 88a kann durch ein einfaches Herausheben aus den Lagerstellen 90a über den Grundbereich 72a entnommen werden. Ferner weist der Rüttelstab 88a an einem der Strömungsleitkammer 76a abgewandten Ende ein Außengewinde 92a auf. Das Außengewinde 92a ragt in einem montierten Zustand durch die Ausnehmung 82a der Endscheibe 46a der Filtereinheit 14a und ist mittels einer Zentralmutter 94a fixiert. Die Filtereinheit 14a ist über den Rüttelstab 88a in dem Filtergehäuse 70a fixiert. Ferner wird der Rüttelstab 88a über die Zentralmutter 94a und die Filtereinheit 14a in den Lagerstellen 90a gehalten.

Die Absaugvorrichtung 10a weist die Zentralmutter 94a auf. Die Zentralmutter 94a ist einstückig ausgebildet. Ferner ist die Zentralmutter 94a selbstsichernd ausgebildet. Die Zentralmutter 94a weist dazu einen Rastfortsatz 96a auf, welcher bei einem Aufdrehen der Zentralmutter 94a auf das Außengewinde 92a des Rüttelstabs 88a über an der Endscheibe 46a angeformte Rampen 98a gleitet. Ein Aufdrehen der Zentralmutter 94a wird durch ein Verrasten des Rastfortsatzes 96a mit den Rampen 98a verhindert. Zu einem Aufdrehen muss ein nicht weiter sichtbares Betätigungselement an der Zentralmutter 94a, welches den Rastfortsatz 96a anhebt, betätigt werden (Figur 3, 4, 5).

Des Weiteren weist die Absaugvorrichtung 10a einen entnehmbaren Staubauffangbehälter 22a auf. Der Staubauffangbehälter 22a ist in das Gehäuse 12a integriert. Der Staubauffangbehälter 22a ist als Staubschublade ausgebildet. Der Staubauffangbehälter 22a ist in einem Schritt entnehmbar. Der Staubauffangbehälter 22a ist einteilig ausgebildet. Des Weiteren ist der Staubauffangbehälter 22a frei von zusätzlichen Bauteilen, wie beispielsweise Deckeln, ausgebildet. Ferner ist der Staubauffangbehälter 22a zu einer Aufnahme eines ausgefilterten Staubs 24a vorgesehen. Der Staubauffangbehälter 22a ist zu einer direkten Aufnahme eines ausgefilterten Staubs 24a vorgesehen. Der als Staubschublade ausgebildete Staubauffangbehälter 22a ist zu einer beutellosen Verwendung vorgesehen. Der Staubauffangbehälter 22a ist in einem Schritt, also ohne das Entfernen eines Deckels oder anderer Bauteile, entleerbar. Der Staubauffangbehälter 22a weist einen Aufnahmebereich 100a auf, der zu der Aufnahme eines ausgefilterten Staubs 24a vorgesehen ist. Ferner ist der Staubauffangbehälter 22a in einem eingeschobenen Zustand räumlich unter der Filtereinheit 14a angeordnet. So kann vorteilhaft erreicht werden, dass Staub 24a, welcher durch den Filter 16a der Filtereinheit 14a ausgefiltert wird, direkt in den Staubauffangbehälter 22a fällt. Eine Oberkante des Aufnahmebereichs 100a schließt über eine Dichtung 32a an die geöffnete, der Strömungsleitkammer 76a gegenüberliegende Stirnseite des Grundbereichs 72a an. Die Absaugvorrichtung 10a weist die Dichtung 32a auf. Die Dichtung 32a ist an einer Kante der Stirnseite des Grundbereichs 72a angeordnet. Der Staubauffangbehälter 22a schließt den Aufnahmebereich 100a in einem in das Gehäuse 12a eingeschobenen Zustand annähernd dicht mit dem Grundbereich 72a ab. Der Aufnahmebereich 100a ist daher mit dem Innenraum des Grundbereichs 72a verbunden (Figur 3).

Der als Staubschublade ausgebildete Staubauffangbehälter 22a bildet einen Teil einer Vorderfont 26a des Gehäuses 12a. Der Staubauffangbehälter 22a weist eine Vorderfront 102a auf, die ein Teil der Vorderfront 26a des Gehäuses 12a bildet. Der Staubauffangbehälter 22a schließt daher, in einem eingeschobenen Zustand, an der Vorderfront 26a des Gehäuses 12a ab. Ferner schließt der Staubauffangbehälter 22a auch an den Seiten, in einem eingeschoben Zustand, mit dem Gehäuse 12a ab. Die Vorderfront 102a des Staubauffangbehälters 22a weist eine Griffmulde auf. Grundsätzlich wäre denkbar, dass der Staubauffangbehälter 22a zusätzliche Transportgriffe aufweist, mittels welchen ein einfaches Entleeren des Staubauffangbehälters 22a möglich ist. Alternativ oder zusätzlich wäre auch denkbar, dass der Staubauffangbehälter 22a ein integriertes Transportsystem zu einem einfachen Transport des Staubauffangbehälters 22a aufweist. Dabei wäre denkbar, dass beispielsweise an einer Unterseite des Staubauffangbehälters 22a Rollen integriert sind. Dabei wäre auch denkbar, dass der Staubauffangbehälter 22a beispielsweise einen integrierten Teleskopgriff aufweist, über welchen der Staubauffangbehälter 22a gezogen werden kann.

Ferner weist die Absaugvorrichtung 10a zwei Rampen 36a, 36a' auf. Über die zwei Rampen 36a, 36a' ist der Staubauffangbehälter 22a in dem Gehäuse 12a geführt. Die zwei Rampen 36a, 36a' dienen als Führung des Staubauffangbehälters 22a. Die Rampen 36a, 36a' sind auf gegenüberliegenden Seiten des Gehäuses 12a angeordnet. Ferner sind die Rampen 36a, 36a' einstückig mit dem Gehäuse 12a ausgebildet. Die Rampen 36a, 36a' sind einstückig mit dem Gehäusegrundkörper 56a ausgebildet. Die Rampen 36a, 36a' sind dazu vorgesehen, den Staubauffangbehälter 22a bei einem Einschubvorgang in das Gehäuse 12a anzuheben und gegen die Dichtung 32a zu drücken. Der Staubauffangbehälter 22a wird dazu, bei einem Einschubvorgang in das Gehäuse 12a, über die Rampen 36a, 36a' nach oben geschoben und dabei angehoben.

Des Weiteren weist die Absaugvorrichtung 10a eine Antriebseinheit 104a auf. Die Antriebseinheit 104a ist als eine Turbine ausgebildet. Die Antriebseinheit 104a ist zu einer Erzeugung eines für eine Absaugung benötigten Unterdrucks vorgesehen. Die Antriebseinheit 104a ist in einem Absorptionskörper 106a angeordnet. Die Antriebseinheit 104a ist verdrehsicher in dem Absorptionskörper 106a gelagert. Der Absorptionskörper 106a dient zu einer Geräuschabsorption. Der Absorptionskörper 106a ist wiederum in dem Gehäuse 12a angeordnet. Der Absorptionskörper 106a ist in dem Gehäusegrundkörper 56a angeordnet. Der Absorptionskörper 106a besteht aus einem Schaum. Ferner besteht der Absorptionskörper 106a aus zwei komplementären Körperschalen 108a, 108a'. Durch die Zweiteilung des Absorptionskörpers 106a kann ein einfaches Einsetzen der Antriebseinheit 104a ermöglicht werden. Die Antriebseinheit 104a kann jedoch auch zu einem Austausch nach oben aus dem Absorptionskörper 106a entnommen werden. Ferner bildet der Absorptionskörper 106a einen Strömungsleitkanal 110a. Die Antriebseinheit 104a ist in dem Strömungsleitkanal 110a angeordnet. Der Strömungsleitkanal 110a ist über eine Öffnung in dem Funktionsbereich 74a des Filtergehäuses 70a mit der Strömungsleitkammer 76a verbunden. An einem der Strömungsleitkammer 76a abgewandten Ende des Strömungsleitkanals 110a endet der Strömungsleitkanal 110a in einem Abluftstutzen für den Anschluss eines Abluftschlauchs oder zu einem direkten Entweichen der gereinigten Luft 20a aus der Absaugvorrichtung 10a. Der Strömungsleitkanal 110a ist zwischen der Antriebseinheit 104a und dem Abluftstutzen strömungsoptimiert. Bei einem direkten Entweichen der gereinigten Luft 20a, wie in diesem Ausführungsbeispiel beispielhaft dargestellt, wird der Abluftstutzen mit einem Gitterdeckel 112a abgedeckt. Der Abluftstutzen ist mit dem Gehäusegrundkörper 56a des Gehäuses 12a einstückig ausgebildet. Ferner ist in dem Absorptionskörper 106a ein Transformator 114a aufgenommen. Der Transformator 114a ist unterhalb des Strömungsleitkanals 110a angeordnet. Des Weiteren verläuft das Ansaugrohr 81a teilweise durch den Absorptionskörper 106a. Im Bereich des Absorptionskörpers 106a weist das Ansaugrohr 81a einen nicht weiter sichtbaren Bypass auf. Durch den Bypass des Ansaugrohrs 81a kann eine Überdruckevakuierung erreicht werden. Es wird ein Zwischenraum zwischen dem Gehäuse 12a und dem Absorptionskörper 106a evakuiert (Figur 3, 5, 5).

Die Antriebseinheit 104a und der Transformator 114a sind über nicht weiter sichtbare Leitungen mit der Elektronikeinheit 64a verbunden. Zur Gewährleistung einer elektrischen Sicherheit sind die Antriebseinheit 104a und der Transformator 114a über einen Steckverbinder 116a mit der Elektronikeinheit 64a verbunden. Bei einem Öffnen des Gehäusedeckels 58a wird der Steckverbinder 116a automatisch von der Elektronikeinheit 64a getrennt. Bei einer Trennung wird zudem eine Abdeckung 118a des Steckverbinders 116a selbsttätig von dem Gehäusedeckel 58a gelöst, um einem Bediener die Trennung anzuzeigen. Durch die Trennung kann eine elektrische Sicherheit gewährleistet werden.

Ferner weist die Absaugvorrichtung 10a eine Wirbelsperreinheit 38a auf. Die Wirbelsperreinheit 38a ist zu einer Vermeidung einer Übertragung von Luftströmungen, insbesondere von Luftverwirbelungen, zwischen einem Strömungsbereich der Filtereinheit 14a und einem Aufnahmebereich 100a des Staubauffangbehälters 22a vorgesehen. Ferner ist die Wirbelsperreinheit 38a zwischen einem Teilbereich des Filters 16a und einem Teilbereich des Staubauffangbehälters 22a angeordnet. Die Wirbelsperreinheit 38a ist räumlich und strömungstechnisch zwischen einem Teilbereich des Filters 16a und einem Teilbereich des Staubauffangbehälters 22a angeordnet. Die Endscheibe 46a der Filtereinheit 14a ist teilweise einstückig mit der Wirbelsperreinheit 38a ausgebildet.

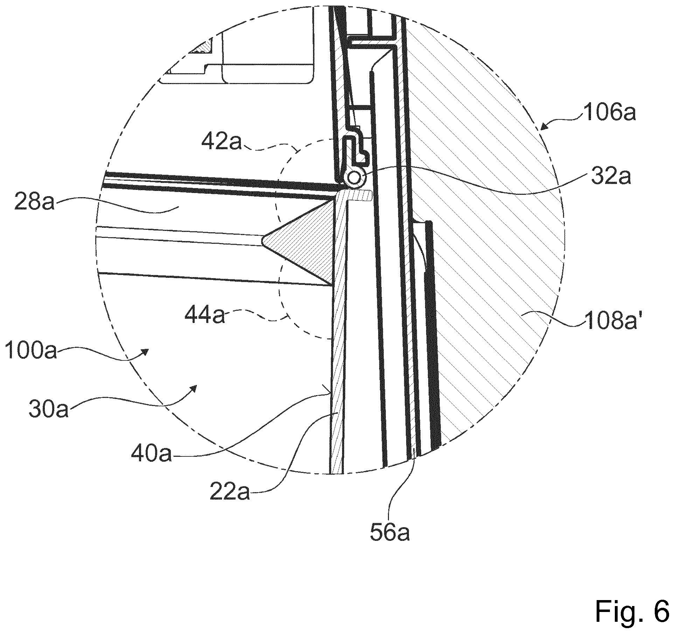

Die Wirbelsperreinheit 38a weist ein Sperrringelement 28a auf. Das Sperrringelement 28a ist zu einer Vermeidung eines Hochwirbelns eines sich in dem Staubauffangbehälter 22a befindlichen Staubs 24a vorgesehen. Das Sperrringelement 28a ist dazu vorgesehen, Verwirbelungen in dem Aufnahmebereich 100a des Staubauffangbehälters 22a nach oben hin zu begrenzen. Ferner bildet das Sperrringelement 28a eine Barriere, die eine Ausbreitung von Verwirbelungen, insbesondere in einem Randbereich des Aufnahmebereichs 100a, nach oben stoppt. Das Sperrringelement 28a ist als ein Ring ausgebildet. Das Sperrringelement 28a der Wirbelsperreinheit 38a ist an einer Innenseite 30a des Staubauffangbehälters 22a angeordnet. Das Sperrringelement 28a liegt in Umfangsrichtung vollständig an einer Innenseite 30a des Staubauffangbehälters 22a an. In dem Staubauffangbehälter 22a liegt das Sperrringelement 28a auf nicht weiter sichtbaren Rippen des Staubauffangbehälters 22a auf. Die Rippen dienen unter anderem der lagerichtigen Positionierung des Sperrringelements 28a. Das Sperrringelement 28a ist an einer Innenseite 30a des Staubauffangbehälters 22a angeklebt. Grundsätzlich wäre jedoch auch eine andere, einem Fachmann als sinnvoll erscheinende Verbindung denkbar. Eine Haupterstreckungsebene des Sperrringelements 28a erstreckt sich annähernd parallel zu einem Boden des Staubauffangbehälters 22a. Das Sperrringelement 28a ragt an einem oberen Rand des Staubauffangbehälters 22a von einer Innenseite 30a horizontal in den Aufnahmebereich 100a. Das Sperrringelement 28a bildet eine rundum verlaufende Wandung, welche senkrecht zu einer Anlagefläche 40a der Innenseite 30a in den Aufnahmebereich 100a ragt. Das Sperrringelement 28a schließt mit seinen freien, an die Anlagefläche 40a der Innenseite 30a des Staubauffangbehälters 22a angrenzenden Flächen jeweils einen stumpfen Winkel 42a, 44a mit einer nächstliegenden Anlagefläche 40a der Innenseite 30a des Staubauffangbehälters 22a ein. Das Sperrringelement 28a weist einen dreieckigen Querschnitt auf. Dabei liegt eine Seite des Dreiecks an der Anlagefläche 40a an, wobei die weiteren zwei Seiten freie Flächen bilden (Figur 3, 6).

Ferner weist die Wirbelsperreinheit 38a eine Strömungsleitschaufel 48a auf. Die Strömungsleitschaufel 48a ist zu einer Vermeidung chaotischer Luft- und/oder Staubverwirbelungen vorgesehen. Die Strömungsleitschaufel 48a weist ein Schaufelelement 120a auf. Das Schaufelelement 120a bildet eine gekrümmte Fläche, welche zu einer Luftleitung vorgesehen ist. Die Strömungsleitschaufel 48a ist direkt gegenüber der Ansaugöffnung des Grundbereichs 72a des Filtergehäuses 70a angeordnet. Angesaugte Luft 18a wird direkt über die Strömungsleitschaufel 48a geleitet. Über die Strömungsleitschaufel 48a wird die angesaugte Luft 18a von dem Staubauffangbehälter 22a weggeleitet. Die Strömungsleitschaufel 48a der Wirbelsperreinheit 38a ist einstückig mit der Endscheibe 46a ausgebildet. Die Strömungsleitschaufel 48a ist direkt an die Endscheibe 46a angeformt. Ferner weist die Strömungsleitschaufel 48a der Wirbelsperreinheit 38a einen Prallschutz 50a auf. Der Prallschutz 50a ist von einer dem Filter 16a zugewandten Wandung gebildet. Der Prallschutz 50a verhindert, dass Staub 24a, welcher aus der Ansaugöffnung des Grundbereichs 72a des Filtergehäuses 70a kommt, direkt ungebremst auf den Filter 16a trifft (Figur 4).

Des Weiteren weist die Wirbelsperreinheit 38a mehrere radiale Wirbelbremselemente 52a auf. Die radiale Wirbelbremselemente 52a sind in Umfangsrichtung um die Endscheibe 46a verteilt angeordnet. Die Wirbelbremselemente 52a sind jeweils als radial verlaufende, vertikale Wandungen ausgebildet. Die Wirbelbremselemente 52a sind im Wesentlichen freistehend ausgebildet. Ferner sind die Wirbelbremselemente 52a auf derselben Höhe angeordnet. Die Wirbelbremselemente 52a sind zu einer Unterbrechung von Verwirbelungen vorgesehen. Die Wirbelbremselemente 52a sind zur Vermeidung eines Weiterleitens von Verwirbelungen in einen Staubauffangbehälter 22a vorgesehen. Des Weiteren sind die radialen Wirbelbremselemente 52a der Wirbelsperreinheit 38a einstückig mit der Endscheibe 46a ausgebildet. Die radialen Wirbelbremselemente 52a sind an einem radialen Außenrand der Endscheibe 46a angeformt.

Ferner weist die Absaugvorrichtung 10a ein Drehpositionselement 54a auf. Das Drehpositionselement 54a ist zu einer Gewährleistung einer lagerichtigen Positionierung der Strömungsleitschaufel 48a und der Wirbelbremselemente 52a vorgesehen. Das Drehpositionselement 54a ist einstückig mit der Endscheibe 46a ausgebildet. Das Drehpositionselement 54a ist als ein Fortsatz ausgebildet, welcher in die Ausnehmung 82a der Endscheibe 46a ragt. In einem montierten Zustand greift das Drehpositionselement 54a in eine Nut in dem Außengewinde 92a des Rüttelstabs 88a ein. Die Nut weist in Umfangsrichtung eine definierte Position auf. Hierdurch wird die Endscheibe 46a relativ zu dem Rüttelstab 88a und damit auch relativ zu dem Filtergehäuse 70a positioniert (Figur 4).

Durch einen in der Absaugvorrichtung 10a umherfliegenden Staub 24a kann es schnell zu statischen Aufladungen kommen. Daher ist eine Minimierung eines Risikos eines elektrischen Schlags, ohne einen Komfort zu beeinträchtigen, wünschenswert. Hierzu ist ein Großteil der Bauteile, an welchen ungefilterte, mit Staub 24a versetzte Luft 18a vorbeiströmt, geerdet. Der Staubauffangbehälter 22a ist in einem Betrieb in einem in das Gehäuse 12a eingeschobenen Zustand geerdet. Ferner besteht der Staubauffangbehälter 22a aus einem elektrisch ableitfähigen Kunststoff. Der Staubauffangbehälter 22a besteht aus dem Kunststoff "POLYFLAM® RABS 90000 UV5" welchem 15% des Permanent-Antistatikums "ALBIS ADDITIVBATCH AS AT 0078-06" beigemischt sind. Grundsätzlich wären jedoch auch andere Mischverhältnisse und/oder Materialien denkbar. Ein Großteil der Bauteile, an welchen ungefilterte, mit Staub 24a versetzte Luft 18a vorbeiströmt, besteht aus einem elektrisch ableitfähigen Kunststoff. Ein Großteil der Bauteile, an welchen ungefilterte, mit Staub 24a versetzte Luft 18a vorbeiströmt, besteht aus einem elektrisch ableitfähigen Kunststoff mit einem Widerstand zwischen 0,8 GΩ und 2 GΩ. Des Weiteren ist die Dichtung 32a der Absaugvorrichtung 10a elektrisch ableitfähig ausgebildet. Die elektrisch ableitfähige Dichtung 32a besteht aus einem elektrisch ableitfähigen Elastomer. Der Staubauffangbehälter 22a liegt in einem in das Gehäuse 12a eingeschobenen Zustand an der elektrisch ableitfähigen Dichtung 32a. Der Staubauffangbehälter 22a und die Dichtung 32a sind demnach, in einem eingeschobenen Zustand des Staubauffangbehälters 22a, elektrisch ableitend miteinander verbunden. Ferner ist die elektrisch ableitfähige Dichtung 32a elektrisch nicht weiter sichtbar mit der Systemerde 34a verbunden. In dem Staubauffangbehälter 22a entstehende statische Aufladungen können daher über die Dichtung 32a auf die Systemerde 34a abgeleitet werden. Des Weiteren sind auch das Ansaugrohr 81a und das Filtergehäuse 70a elektrisch nicht weiter sichtbar mit der Systemerde 34a verbunden. Das Ansaugrohr 81a und das Filtergehäuse 70a bestehen jeweils aus einem elektrisch ableitfähigen Kunststoff.

In einem Betrieb wird durch die Antriebseinheit 104a verschmutzte, ungefilterte Luft 18a an dem Ansaugrohr 81a angesaugt und in den Innenraum des Grundbereichs 72a des Filtergehäuses 70a gesaugt. In dem Innenraum des Grundbereichs 72a wird durch die Strömungsleitschaufel 48a eine Strömung um den Filter 16a der Filtereinheit 14a erzeugt. Anschließend wird die verschmutzte, ungefilterte Luft 18a - durch die erzeugte Strömung gleichmäßig verteilt - durch den Filter 16a gesaugt. Die gefilterte Luft 20a wird aus dem Innenraum der Filtereinheit 14a durch die Ausnehmung 86a in die Strömungsleitkammer 76a gesaugt. Aus der Strömungsleitkammer 76a wird die Luft 20a in den Strömungsleitkanal 110a des Absorptionskörpers 106a gesaugt. Dort gelangt die Luft 20a durch die Antriebseinheit 104a und wird durch den Strömungsleitkanal 110a zu dem Abluftstutzen geblasen. Dort gelangt die gefilterte Luft 20a durch den Gitterdeckel 112a aus der Absaugvorrichtung 10a.

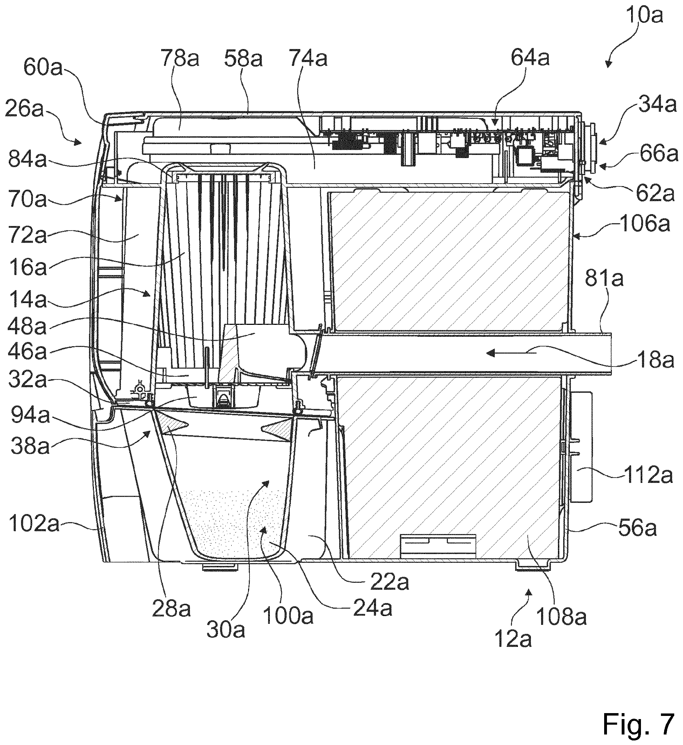

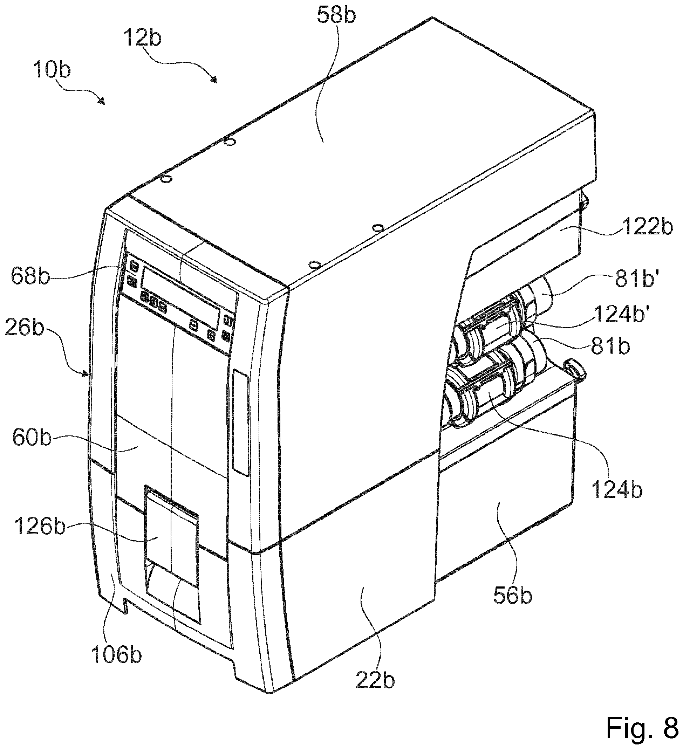

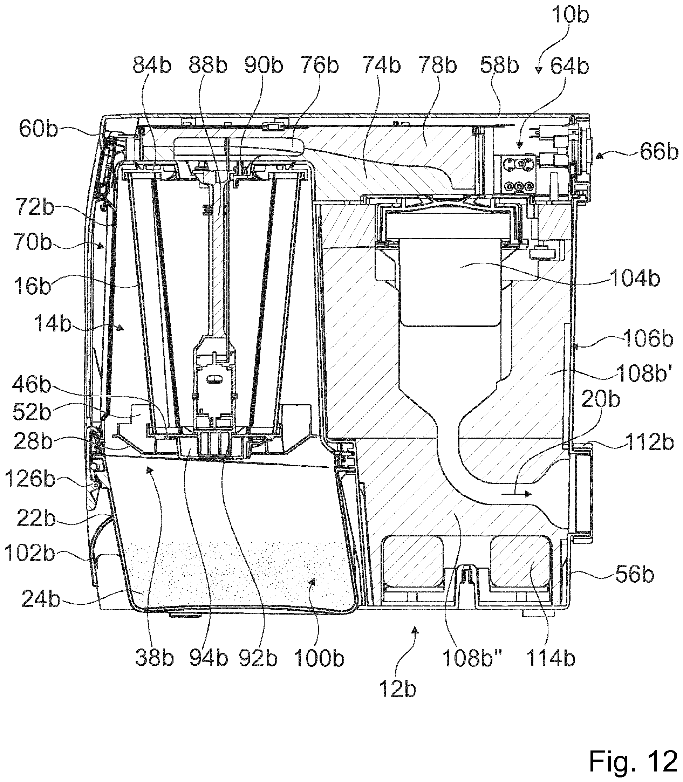

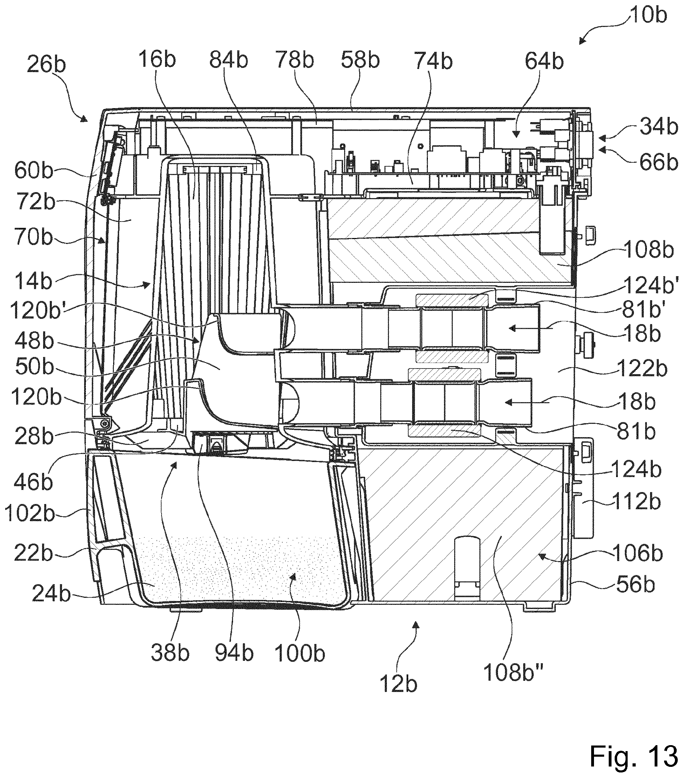

In den Figuren 8 bis 13 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des ersten Ausführungsbeispiels der Figuren 1 bis 7 verwiesen werden kann. Zur Unterscheidung der Ausführungsbeispiele ist der Buchstabe a in den Bezugszeichen des Ausführungsbeispiels der Figuren 1 bis 6 durch die Buchstaben b in den Bezugszeichen des Ausführungsbeispiels der Figuren 8 bis 13 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels der Figuren 1 bis 7 verwiesen werden.

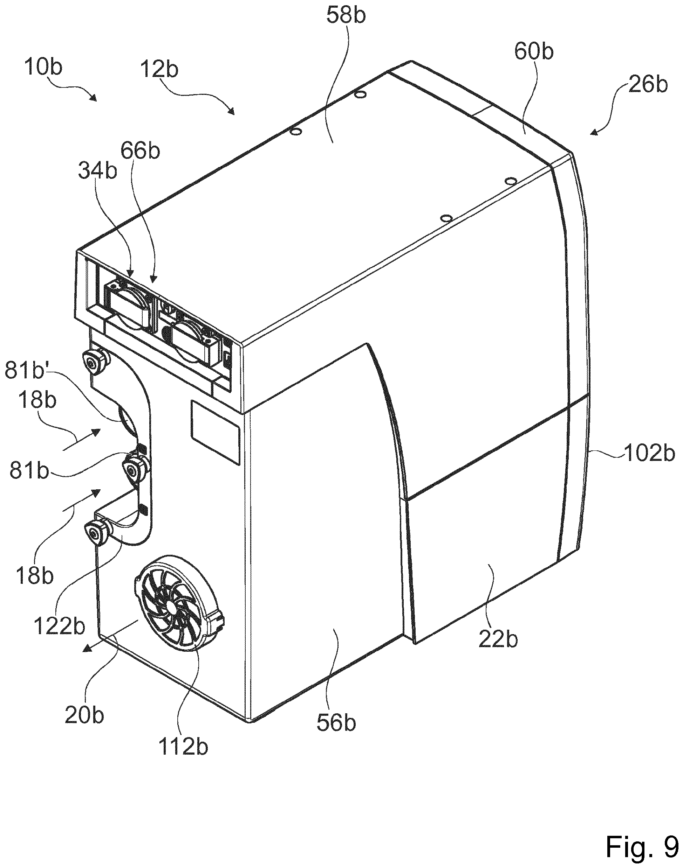

Figur 8 zeigt eine Absaugvorrichtung 10b in einer schematischen Darstellung. Die Absaugvorrichtung 10b weist ein Gehäuse 12b auf. Das Gehäuse 12a weist einen Gehäusegrundkörper 56b, einen auf der Gehäusegrundkörper 56b angeordneten Gehäusedeckel 58b und eine Frontblende 60b auf. Die Frontblende 60b ist einstückig mit dem Gehäusedeckel 58b ausgebildet (Figur 8, 9).

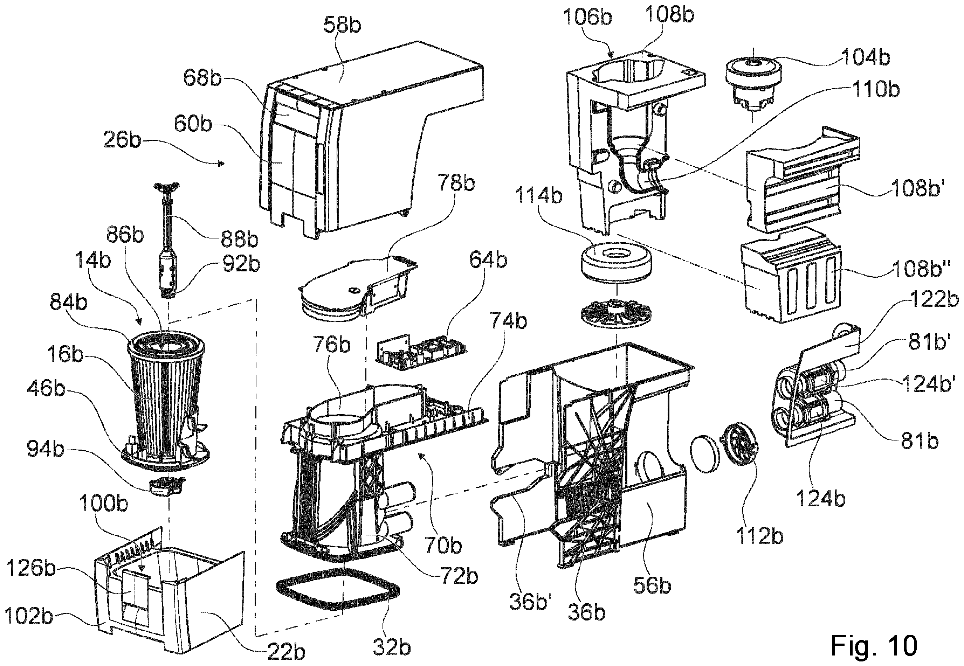

Ein Filtergehäuse 70b weist einen zumindest teilweise plattenförmigen Funktionsbereich 74b auf. Über den Funktionsbereich 74b ist das Filtergehäuse 70b nicht weiter sichtbar mit dem Gehäuse 12b verschraubt. Ferner weist der Funktionsbereich 74b eine Strömungsleitkammer 76b auf. Die Strömungsleitkammer 76b ist nach oben hin, auf einer dem Grundbereich 72b abgewandten Seite, mittels einem Deckel 78b verschlossen. Der Deckel 78b ist mehrteilig ausgebildet und weist nicht weiter sichtbare Schalldämpfer auf. Neben der Strömungsleitkammer 76b ist eine Elektronikeinheit 64b der Absaugvorrichtung 10b angeordnet. Die Elektronikeinheit 64b ist auf dem Funktionsbereich 74b des Filtergehäuses 70b angeordnet. Die Elektronikeinheit 64b ist nicht weiter sichtbar mit dem Funktionsbereich 74b des Filtergehäuses 70b verrastet. Ferner weist das Filtergehäuse 70b einen annähernd hohlzylindrischen Grundbereich 72b auf. Der Grundbereich 72b weist zwei in einer Mantelfläche angeordnete Ansaugöffnungen auf. An den Ansaugöffnungen des Grundbereichs 72b ist jeweils ein Ansaugrohr 81b, 81b' angeschlossen. Die Ansaugrohre 81b, 81b' ragen in einer dafür vorgesehenen Gehäuseausbuchtung 122b, welche in einer Öffnung des Gehäusegrundkörpers 56b angeordnet ist, teilweise aus dem Gehäuse 12b der Absaugvorrichtung 10b. Ferner weisen die Ansaugrohre 81b, 81b' jeweils ein integriertes Quetschventil 124b, 124b' auf. Die Quetschventile 124b, 124b' sind nicht weiter sichtbar mit der Elektronikeinheit 64b verbunden und können von dieser angesteuert werden. Über die Quetschventile 124b, 124b' können die Ansaugrohre 81b, 81b' je nach Nutzung jeweils geöffnet oder geschlossen werden. An die Ansaugrohre 81a, 81a' können jeweils Absaugschläuche angeschlossen werden. Es können sowohl beide Ansaugrohre 81a, 81a', als auch lediglich eines der beiden Ansaugrohre 81a, 81a' genutzt werden (Figur 10).

Des Weiteren weist die Absaugvorrichtung 10b einen entnehmbaren Staubauffangbehälter 22b auf. Der Staubauffangbehälter 22b ist in das Gehäuse 12b integriert. Der Staubauffangbehälter 22b ist als Staubschublade ausgebildet. Ferner weist die Absaugvorrichtung 10b eine Verschlusseinheit 126b auf. Über die Verschlusseinheit 126b kann der Staubauffangbehälter 22b in einem in das Gehäuse 12b eingeschobenen Zustand an dem Gehäuse 12b positionsfest fixiert werden. Die Verschlusseinheit 126b dient zu einer vertikalen Fixierung des Staubauffangbehälters 22b an der Frontblende 60b des Gehäuses 12b. Die Verschlusseinheit 126b ist als ein Kniehebelspannverschluss ausgebildet. Hierdurch kann auch bei schwerer Füllung des Staubauffangbehälters 22b eine zuverlässige Abdichtung bereitgestellt werden. Der Staubauffangbehälter 22b weist einen Aufnahmebereich 100b auf, der zu der Aufnahme eines ausgefilterten Staubs 24b vorgesehen ist. Der Aufnahmebereich 100b weist eine annähernd eckige, insbesondere viereckige, Innenkontur auf. Hierdurch kann vorteilhaft eine Strömungsberuhigung erreicht werden.

Des Weiteren weist die Absaugvorrichtung 10b eine Antriebseinheit 104b auf. Die Antriebseinheit 104b ist als eine Turbine ausgebildet. Die Antriebseinheit 104b weist ein Gehäuse auf, in welchem ein Motor sowie ein Turbinenrad angeordnet sind. Die Antriebseinheit 104b ist elektrisch sicher ausgebildet. Die Antriebseinheit 104b ist in einem Absorptionskörper 106b angeordnet. Der Absorptionskörper 106b besteht aus drei komplementären Körperschalen 108b, 108b', 108b". Zudem ist die Antriebseinheit 104b mit einem Gehäusegrundkörper 56b des Gehäuses 12b verschraubt. Hierdurch kann ein Absetzten verhindert werden. Zusätzlich erfolgt eine Entkopplung des Schalls durch nicht weiter sichtbare Gummi-Metall-Puffer.

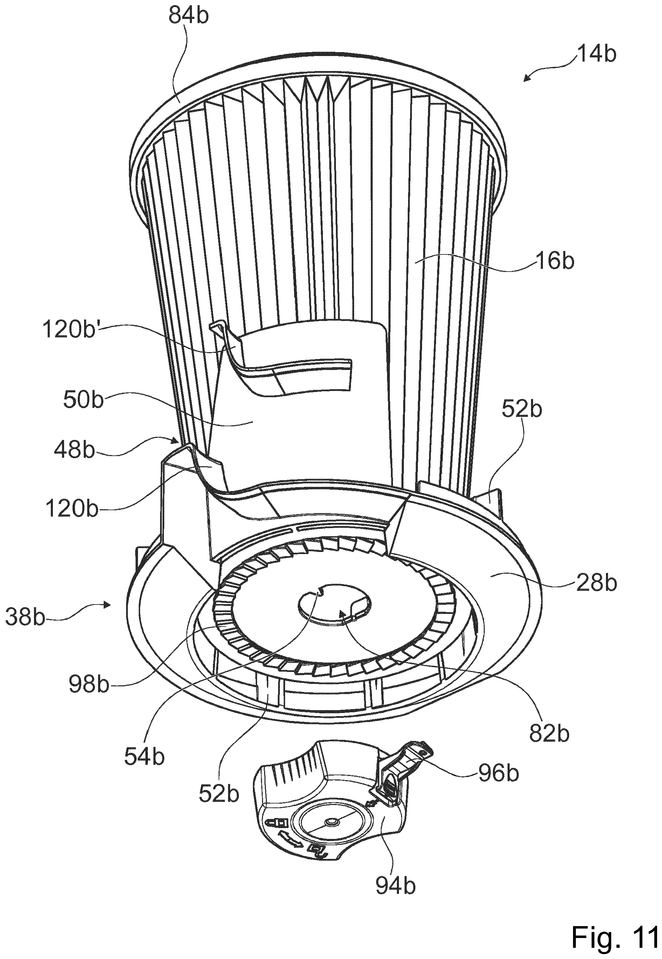

Ferner weist die Absaugvorrichtung 10b eine Wirbelsperreinheit 38b auf. Die Wirbelsperreinheit 38b ist einstückig mit einer Endscheibe 46b der Filtereinheit 14b ausgebildet. Die Wirbelsperreinheit 38b weist ein Sperrringelement 28b auf. Das Sperrringelement 28b ist als ein Ring ausgebildet. Das Sperrringelement 28b der Wirbelsperreinheit 38b ist einstückig mit der Endscheibe 46b der Filtereinheit 14b ausgebildet. Das Sperrringelement 28b ist an einem radialen Außenrand der Endscheibe 46b angeformt. Zwischen dem Sperrringelement 28b und einem Grundkörper der Endscheibe 46b sind mehrere radiale Wirbelbremselemente 52b der Wirbelsperreinheit 38b angeordnet. Das Sperrringelement 28b ist von einem ringförmigen Steg gebildet, der gegenüber einer Haupterstreckungsebene des Sperrringelements 28b geneigt ist. Das Sperrringelement 28b ist zu einem geometrischen Mittelpunkt hin nach unten geneigt. So kann zuverlässig ein Herunterfallen von Staub 24b von der Filtereinheit in den Staubauffangbehälter 22b gewährleistet werden. Auf der anderen Seite kann ein Nach-Oben-Steigen von Verwirbelungen in dem Staubauffangbehälter 22b vermieden werden (Figur 11).

Ferner weist die Wirbelsperreinheit 38b eine Strömungsleitschaufel 48b auf. Die Strömungsleitschaufel 48b weist zwei Schaufelelemente 120b, 120b' auf. Die Schaufelelemente 120b, 120b' bilden jeweils eine gekrümmte Fläche, welche zu einer Luftleitung vorgesehen ist. Die Strömungsleitschaufel 48b ist direkt gegenüber den Ansaugöffnungen des Grundbereichs 72b des Filtergehäuses 70b angeordnet, wobei jedes Schaufelelement 120b, 120b' jeweils einer Ansaugöffnung zugeordnet ist.

## Patentansprüche

1. Absaugvorrichtung, insbesondere Dentallaborabsaugvorrichtung, mit zumindest einem Gehäuse (12a; 12b), mit zumindest einer, zumindest teilweise in dem Gehäuse (12a; 12b) angeordneten Filtereinheit (14a; 14b), die zumindest einen Filter (16a; 16b) aufweist, welcher in einem Betrieb zu einer Filterung abgesaugter Luft (18a, 20a; 18b, 20b) vorgesehen ist,
und mit
zumindest einem entnehmbaren, in das Gehäuse (12a; 12b) integrierten Staubauffangbehälter (22a; 22b), welcher als Staubschublade ausgebildet ist und zu einer Aufnahme eines ausgefilterten Staubs (24a; 24b) vorgesehen ist,
**dadurch gekennzeichnet, dass**
der zumindest eine Staubauffangbehälter (22a; 22b) zumindest teilweise aus einem elektrisch ableitfähigen Kunststoff besteht und in einem Betrieb in einem in das Gehäuse (12a; 12b) eingeschobenen Zustand geerdet ist.

2. Absaugvorrichtung nach Anspruch 1,
**dadurch gekennzeichnet, dass**
der zumindest eine, als Staubschublade ausgebildete Staubauffangbehälter (22a; 22b) zumindest einen Teil einer Vorderfont (26a; 26b) des Gehäuses (12a; 12b) bildet.

3. Absaugvorrichtung nach Anspruch 1 oder 2,
**dadurch gekennzeichnet, dass**
der zumindest eine, als Staubschublade ausgebildete Staubauffangbehälter (22a; 22b) zu einer beutellosen Verwendung vorgesehen ist.

4. Absaugvorrichtung nach einem der vorhergehenden Ansprüche,
**gekennzeichnet durch**
zumindest ein Sperrringelement (28a), welches an einer Innenseite (30a) des Staubauffangbehälters (22a) angeordnet ist, wobei das Sperrringelement (28a) eine Barriere bildet, die eine Ausbreitung von Verwirbelungen nach oben stoppt.

5. Absaugvorrichtung nach einem der vorhergehenden Ansprüche,
**gekennzeichnet durch**
zumindest eine elektrisch ableitfähige Dichtung (32a; 32b), an welcher der zumindest eine Staubauffangbehälter (22a; 22b) in einem in das Gehäuse (12a; 12b) eingeschobenen Zustand anliegt.

6. Absaugvorrichtung nach Anspruch 5,
**dadurch gekennzeichnet, dass**
die zumindest eine elektrisch ableitfähige Dichtung (32a; 32b) elektrisch mit einer Systemerde (34a; 34b) verbunden ist.

7. Absaugvorrichtung nach Anspruch 5 oder 6,
**dadurch gekennzeichnet, dass**
die zumindest eine elektrisch ableitfähige Dichtung (32a; 32b) zumindest teilweise aus einem elektrisch ableitfähigen Elastomer besteht.

8. Absaugvorrichtung nach einem der vorhergehenden Ansprüche,
**gekennzeichnet durch**
zumindest eine Rampe (36a, 36a'; 36b, 36b'), auf welcher der zumindest eine Staubauffangbehälter (22a; 22b) in dem Gehäuse (12a; 12b) geführt ist.

9. Absaugvorrichtung nach Anspruch 8 und nach einem der Ansprüche 5 bis 7,
**dadurch gekennzeichnet, dass**
die zumindest eine Rampe (36a, 36a'; 36b, 36b') dazu vorgesehen ist, den zumindest einen Staubauffangbehälter (22a; 22b) bei einem Einschubvorgang in das Gehäuse (12a; 12b) anzuheben und gegen die Dichtung (32a; 32b) zu drücken.

10. Absaugvorrichtung nach Anspruch 8 oder 9,
**dadurch gekennzeichnet, dass**
die zumindest eine Rampe (36a, 36a'; 36b, 36b') einstückig mit dem Gehäuse (12a; 12b) ausgebildet ist.

11. Absaugvorrichtung nach einem der vorhergehenden Ansprüche,
**gekennzeichnet durch**
zumindest eine Verschlusseinheit (126b), über welche der zumindest eine Staubauffangbehälter (22b) in einem in das Gehäuse (12b) eingeschobenen Zustand an dem Gehäuse (12b) positionsfest fixiert werden kann.

## Claims

1. Suction device, in particular dental laboratory suction device, with at least one housing (12a; 12b), with at least one filtering unit (14a; 14b), which is at least partially arranged in the housing (12a; 12b) and which comprises at least one filter (16a; 16b) configured in operation for filtering suctioned air (18a, 20a; 18b; 20b), and with at least one removable dust collecting container (22a; 22b) integrated in the housing (12a; 12b), which is embodied as a dust drawer and is configured for receiving a filtered-out dust (24a; 24b), **characterised in that** the at least one dust collecting container (22a; 22b) consists at least partially of an electrically conductive plastic material and is earthed in operation in a state when inserted into the housing (12a; 12b).

2. Suction device according to claim 1, **characterised in that** the at least one dust collecting container (22a; 22b) embodied as a dust drawer forms at least a portion of an anterior front (26a; 26b) of the housing (12a; 12b).

3. Suction device according to claim 1 or 2, **characterised in that** the at least one dust collecting container (22a; 22b) embodied as a dust drawer is configured for a bagless use.

4. Suction device according to one of the preceding claims, **characterised by** at least one blocking ring element (28a), which is arranged on an inner side (30a) of the dust collecting container (22a), wherein the blocking ring element (28a) forms a barrier that stops a spread of turbulences upwards.

5. Suction device according to one of the preceding claims, **characterised by** at least one electrically conductive seal (32a; 32b), which the at least one dust collecting container (22a; 22b) abuts on in a state when inserted in the housing (12a; 12b).

6. Suction device according to claim 5, **characterised in that** the at least one electrically conductive seal (32a; 32b) is electrically connected to a system ground (34a; 34b).

7. Suction device according to claim 5 or 6, **characterised in that** the at least one electrically conductive seal (32a; 32b) consists at least partially of an electrically conductive elastomer.

8. Suction device according to one of the preceding claims, **characterised by** at least one ramp (36a, 36a'; 36b, 36b'), on which the at least one dust collecting container (22a; 22b) is guided in the housing (12a; 12b).

9. Suction device according to claim 8 and according to one of claims 5 to 7, **characterised in that** the at least one ramp (36a, 36a'; 36b, 36 b') is configured for lifting the at least one dust collecting container (22a; 22b) when in an insertion process into the housing (12a; 12b) and for pressing it against the seal (32a; 32b).

10. Suction device according to claim 8 or 9, **characterised in that** the at least one ramp (36a, 36a'; 36b, 36b') is realized integrally with the housing (12a; 12b).

11. Suction device according to one of the preceding claims, **characterised by** at least one closure unit (126b), by means of which the at least one dust collecting container (22b) can be fixed in a fixed position at the housing (12b) in a state when inserted into the housing (12b).

## Revendications

1. Dispositif d'aspiration, en particulier dispositif d'aspiration de laboratoire dentaire, avec au moins un boîtier (12a; 12b), avec au moins une unité de filtrage (14a; 14b) qui est disposée au moins partiellement dans le boîtier (12a; 12b) et comporte au moins un filtre (16a; 16b) prévu dans une opération pour un filtrage d'air aspiré (18a, 20a; 18b; 20b), et avec au moins un récipient collecteur de poussière (22a; 22b) amovible, qui est intégré dans le boîtier (12a; 12b)et est conçu comme un tiroir de poussière et est prévu pour recevoir une poussière extraite par filtration (24a; 24b), **caractérisé en ce que** l'au moins un récipient collecteur de poussière (22a; 22b) se compose au moins partiellement d'un plastique conducteur d'électricité et est mis à la terre lors d'une opération dans un état inséré dans le boîtier (12a; 12b).

2. Dispositif d'aspiration selon la revendication 1, **caractérisé en ce que** l'au moins un récipient collecteur de poussière (22a; 22b) conçu comme un tiroir de poussière constitue au moins une partie de la façade avant (26a; 26b) du boîtier (12a; 12b).

3. Dispositif d'aspiration selon la revendication 1 ou 2, **caractérisé en ce que** l'au moins un récipient collecteur de poussière (22a; 22b) conçu comme un tiroir de poussière est prévu pour une utilisation sans sachet.

4. Dispositif d'aspiration selon l'une quelconque des revendications précédentes, **caractérisé par** au moins un élément d'anneau à verrouillage (28a) disposé sur un côté intérieur (30a) du récipient collecteur de poussière (22a), où l'élément d'anneau à verrouillage (28a) forme une barrière qui empêche la propagation des turbulences vers le haut.

5. Dispositif d'aspiration selon l'une quelconque des revendications précédentes, **caractérisé par** au moins un sceau électriquement conducteur (32a; 32b) contre lequel repose l'au moins un récipient collecteur de poussière (22a; 22b) lorsqu'il est inséré dans le boîtier (12a; 12b).

6. Dispositif d'aspiration selon la revendication 5, **caractérisé en ce que** l'au moins un sceau électriquement conducteur (32a; 32b) est connecté électriquement à une terre de système (34a; 34b).

7. Dispositif d'aspiration selon la revendication 5 ou 6, **caractérisé en ce que** l'au moins un sceau électriquement conducteur (32a; 32b) est constitué au moins partiellement d'un élastomère électriquement conducteur.

8. Dispositif d'aspiration selon l'une quelconque des revendications précédentes, **caractérisé par** au moins une rampe (36a, 36a'; 36b, 36b'), sur laquelle est guidé l'au moins un récipient collecteur de poussière (22a; 22b) dans le boîtier (12a; 12b).

9. Dispositif d'aspiration selon la revendication 8 et selon l'une des revendications 5 à 7, **caractérisé en ce que** l'au moins une rampe (36a, 36a'; 36b, 36b') est prévue pour soulever l'au moins un récipient collecteur de poussière (22a; 22b) lorsqu'il est poussé dans le boîtier (12a; 12b) et à le presser contre le sceau (32a; 32b).

10. Dispositif d'aspiration au moins selon la revendication 8 ou 9, **caractérisé en ce que** l'au moins une rampe (36a, 36a'; 36b, 36b') est formée intégralement avec le boîtier (12a; 12b).

11. Dispositif d'aspiration selon l'une quelconque des revendications précédentes, **caractérisé par** au moins une unité de fermeture (126b), au moyen de laquelle l'au moins un récipient collecteur de poussière (22b) peut être fixé dans une position fixe sur le boîtier (12b) en état d'être poussé dans le boîtier (12b).
